# FASCICULE DE BREVET EUROPEEN

(11) **EP 4 090 699 B1**
(45) Date de publication et mention de la délivrance du brevet: **03.01.2024**
(21) Numéro de dépôt: 21709086.9
(22) Date de dépôt: 17.02.2021
(51) Int. Cl.: C08J 7/16, C08J 7/02

(54) **PROCÉDÉ DE MODIFICATION CHIMIQUE D'UNE PIÈCE POLYMÉRIQUE EN VUE DE LUI CONFÉRER DES PROPRIÉTÉS ANTISTATIQUES OU AMÉLIORER CELLES-CI**
CHEMISCHES MODIFIZIERUNGSVERFAHREN FÜR EIN POLYMERTEIL MIT DEM ZIEL, ES ANTISTATISCHE EIGENSCHAFTEN ZU VERLEIHEN ODER DIESE EIGENSCHAFTEN ZU VERBESSERN
CHEMICAL MODIFICATION PROCESS OF A POLYMERIC ARTICLE WITH A VIEW TO GIVE IT ANTISTATIC PROPERTIES OR TO IMPROVE THESE PROPERTIES

(30) Priorité: 26.02.2020 FR 2001883
(43) Date de publication de la demande: 23.11.2022
(73) Titulaire: Commissariat à l'énergie atomique et aux énergies alternatives, 75015 Paris (FR)
(72) Inventeur: DELMAS, Jérôme, 38054 Grenoble Cedex 09 (FR); BLANCHOT, Olivier, 38054 Grenoble Cedex 09 (FR); PILUSO, Pierre, 38054 Grenoble Cedex 09 (FR); PONCELET, Olivier, 38054 Grenoble Cedex 09 (FR); ROUGEAUX, Isabelle, 38054 Grenoble Cedex 09 (FR)
(74) Mandataire: Brevalex
(86) Numéro de dépôt international: PCT/FR2021/050274
(87) Numéro de publication internationale: WO 2021/170938

(56) Documents cités:
- DE-A1- 3 625 272
- US-A- 5 453 467
- TAE YOUNG KIM ET AL: "Effects of alcoholic solvents on the conductivity of tosylate-doped poly(3,4-ethylenedioxythiophene) (PEDOT-OTs)", POLYMER INTERNATIONAL, vol. 55, no. 1, 18 novembre 2005 (2005-11-18), pages 80-86, XP055742952, GB ISSN: 0959-8103, DOI: 10.1002/pi.1921
- ANDREW I. COOPER: "Polymer synthesis and processing using supercritical carbon dioxide", JOURNAL OF MATERIALS CHEMISTRY, vol. 10, no. 2, 1 janvier 2000 (2000-01-01), pages 207-234, XP055112373, ISSN: 0959-9428, DOI: 10.1039/a906486i

## Description

### DOMAINE TECHNIQUE

La présente invention a trait à un procédé de modification chimique d'une pièce polymérique en vue de lui conférer des propriétés antistatiques ou améliorer celles-ci, ce procédé s'effectuant dans un milieu permettant une modification chimique tant en surface qu'au coeur de la pièce polymérique, soit autrement dit dans l'ensemble du volume de la pièce.

Classiquement, les propriétés d'une pièce polymérique peuvent être modifiées ou améliorées de différentes manières, telles que par exemple :
- l'adjonction d'une ou plusieurs charges organiques ou inorganiques pour former un matériau composite, avec toutefois la possibilité que la présence de charges ait un effet négatif sur les propriétés du polymère que l'on ne souhaite pas modifier ; ou
- l'imprégnation du polymère avec un ou plusieurs agents chimiques permettant de conférer ou d'améliorer la propriété ciblée avec toutefois le ou les inconvénients suivants :
   *l'imprégnation ne résulte qu'en un traitement de surface et ne permet pas d'atteindre la pièce en profondeur, la propriété ciblée ne se trouvant ainsi que localisée en surface de la pièce ;
   *l'imprégnation ne permet pas une fixation forte du ou des agents chimiques, la propriété ciblée conférée par ce ou ces agents ne présentant pas une tenue satisfaisante dans le temps.

Au vu de ce qui précède, les auteurs de la présente invention se sont proposé de mettre au point un procédé de modification d'une pièce polymérique en vue de lui conférer des propriétés antistatiques ou améliorer celles-ci qui ne présente pas les limitations des procédés mentionnés ci-dessous.

### EXPOSÉ DE L'INVENTION

Ainsi, l'invention a trait à un procédé de modification chimique d'une pièce polymérique en vue de lui conférer des propriétés antistatiques ou améliorer celles-ci, comprenant les étapes suivantes :
- une étape de réaction d'une pièce polymérique comprenant au moins un polymère comprenant, comme groupes réactifs, des groupes amines et/ou des groupes hydroxyles, avec un composé fonctionnel, dit également premier composé, comprenant au moins un groupe isocyanate et au moins un groupe polymérisable du type hétérocyclique, les groupes isocyanates réagissant, de manière covalente avec tout ou partie des groupes amines et/ou des groupes hydroxyles du ou des polymères, moyennant quoi il résulte une pièce polymérique liée, de manière covalente, à des restes du composé fonctionnel ;
- à partir des groupes polymérisables du type hétérocyclique des restes du composé fonctionnel, une étape de polymérisation d'un deuxième composé comprenant au moins un groupe polymérisable du type hétérocyclique en présence d'un complexe métallique,
ladite étape de réaction et ladite étape de polymérisation étant réalisées en présence d'au moins un fluide supercritique.

Par pièce polymérique, il est précisé qu'il s'agit d'une pièce en un matériau comprenant au moins un polymère comprenant, comme groupes réactifs, des groupes amines et/ou des groupes hydroxyles, le ou lesdits polymères étant mis sous forme de la pièce, par exemple, par une technique de mise en forme, telle que la technique d'impression 3D ou la technique d'extrusion/injection, le procédé de l'invention pouvant s'inscrire ainsi dans le cycle de fabrication d'une pièce au stade du *« post-process* » (c'est-à-dire le stade de finition de la pièce après sa mise en forme).

Grâce à l'utilisation d'au moins un fluide supercritique pour mettre en oeuvre les étapes susmentionnées, il a été constaté les avantages suivants :
- la possibilité d'entraîner le composé fonctionnel et le deuxième composé en profondeur de la pièce polymérique et ainsi de permettre une modification chimique de celle-ci tant en surface qu'en profondeur et donc dans l'ensemble de la pièce ;
- un pouvoir solvatant important, qui permet de conférer aux étapes une cinétique de réaction beaucoup plus rapide par rapport à des réactions similaires, qui seraient conduites dans un milieu non supercritique ;
- la possibilité de réaliser ladite modification sans utilisation de solvant organique volatil dont l'élimination après réaction serait énergétiquement et temporellement coûteuse et dont des traces seraient susceptibles d'être présentes dans les pièces traitées ;
- la possibilité de réaliser ladite modification en limitant la quantité utilisée de réactif(s), le cas échéant, de catalyseur(s) ainsi que la quantité résiduelle de réactif(s), le cas échéant, de catalyseur(s) dans les pièces polymériques comparativement à des procédés classiques d'imprégnation.

Par ailleurs, le procédé de l'invention peut présenter les avantages suivants :
- un procédé facilement industrialisable comportant un faible nombre d'étapes, ne nécessitant généralement pas de grandes quantités de produits (ce qui est un avantage de l'utilisation d'un fluide supercritique par rapport à des techniques d'immersion dans un solvant liquide) et permettant le traitement simultané de plusieurs pièces ;
- pas de préparation préalable de la surface des pièces à traiter ;
- la possibilité de traiter tous les reliefs complexes des pièces, le cas échéant.

Par fluide supercritique, il s'entend un fluide porté à une pression et une température au-delà de son point critique, correspondant au couple de température et de pression (respectivement Tc et Pc), pour lequel la phase liquide et la phase gazeuse présentent la même densité et au-delà duquel le fluide se situe dans son domaine supercritique. Dans des conditions supercritiques, le fluide présente un pouvoir de dissolution très accrue par rapport au même fluide dans des conditions non supercritiques et facilite de ce fait la solubilisation du composé fonctionnel et du deuxième composé. Il s'entend que le fluide supercritique utilisé est apte à solubiliser le composé fonctionnel et le deuxième composé utilisés.

Le fluide supercritique peut être, avantageusement, du CO₂ supercritique, notamment en raison de sa température critique faible (31°C), ce qui permet de mettre en oeuvre la réaction à basse température sans risque de dégradation du composé fonctionnel et du deuxième composé. Plus précisément, le CO₂ supercritique s'obtient en chauffant du dioxyde de carbone au-delà de sa température critique (31°C) et en le comprimant au-dessus de sa pression critique (73 bars). Qui plus est, le CO₂ supercritique est non inflammable, non toxique, relativement bon marché et ne nécessite pas de retraitement à l'issue du procédé, comparativement à des procédés impliquant l'utilisation exclusive de solvant organique, ce qui en fait également un solvant « vert » pertinent d'un point de vue industriel. Enfin, le CO₂ supercritique présente un bon pouvoir solvatant (adaptable en fonction des conditions de pression et de température utilisées), une viscosité faible et une diffusivité importante. Enfin, sa nature gazeuse dans les conditions ambiantes de pression et de température rend, à l'issue des étapes et une fois le CO₂ ramené à un état non supercritique, les étapes de séparation de la pièce ainsi modifiée et le milieu réactionnel (comprenant, par exemple, des composés n'ayant pas réagi) et ainsi que la réutilisation du CO₂, faciles à réaliser. Par ailleurs, le CO₂ supercritique est à même de pouvoir diffuser en profondeur de la pièce polymérique et de contribuer à sa plastification, ce qui peut faciliter les étapes de réaction. Toutes ces conditions susmentionnées contribuent à faire du CO₂ supercritique un excellent choix de solvant pour mener à bien les étapes du procédé conforme à l'invention.

Comme mentionné ci-dessus, le procédé de l'invention comprend, en premier lieu, une étape de réaction d'une pièce polymérique comprenant au moins un polymère comprenant, comme groupes réactifs, des groupes amines et/ou des groupes hydroxyles, avec un composé fonctionnel, dit également premier composé, comprenant au moins un groupe isocyanate et au moins un groupe polymérisable du type hétérocyclique, les groupes isocyanates réagissant, de manière covalente avec tout ou partie des groupes amines et/ou des groupes hydroxyles du ou des polymères, moyennant quoi il résulte une pièce polymérique liée, de manière covalente, à des restes du composé fonctionnel (les restes étant ce qu'il subsiste du composé fonctionnel après qu'il ait réagi *via* son ou ses groupes isocyanates avec les groupes amines et/ou les fonctions hydroxyles de la pièce polymérique, étant entendu que ces restes comprennent, encore, au moins un groupe polymérisable du type hétérocyclique).

La pièce polymérique destinée à être traitée conformément au procédé de l'invention est une pièce comprenant (voire constituée exclusivement d') au moins un polymère comprenant, comme groupes réactifs, des groupes amines et/ou des groupes hydroxyles, les groupes amines réagissant, de manière covalente, avec les groupes isocyanates du composé fonctionnel pour former une liaison urée et les groupes hydroxyles réagissant, de manière covalente, avec les groupes isocyanates du ou des composés fonctionnels pour former une liaison uréthane.

En particulier, la pièce polymérique destinée à être traitée conformément peut être une pièce comprenant (voire constituée exclusivement d') un ou plusieurs polyamides et, encore plus spécifiquement, la pièce polymérique peut être une pièce en polyamide-12, les groupes réactifs étant, dans ce cas, des groupes amines.

Plus spécifiquement, la pièce peut être en polyamide-12 poreux ou partiellement poreux et, encore plus spécifiquement, la pièce peut être en polyamide-12 présentant une densité inférieure ou égale à 960 kg/m³, par exemple allant de 650 kg/m³ à 960 kg/m³, de préférence inférieure ou égale à 900 kg/m³, par exemple allant de 700 kg/m³ à 900 kg/m³.

Le composé fonctionnel est, avantageusement, un composé non polymérique, c'est-à-dire qu'il n'est pas un polymère, c'est-à-dire un composé comprenant un enchaînement d'unité(s) répétitive(s), ce qui lui permet d'accéder plus aisément au coeur de la pièce polymérique et réagir de manière covalente avec les groupes réactifs situés au coeur de la pièce polymérique.

En fonction du composé fonctionnel retenu, l'homme du métier choisira les paramètres opératoires pour permettre la réaction covalente avec les groupes réactifs de la pièce polymérique, ces paramètres opératoires pouvant être déterminés par des tests préalables.

A titre d'exemple, lorsque le polymère est un polyamide-12, l'étape de réaction peut être illustrée par le schéma réactionnel simplifié suivant :

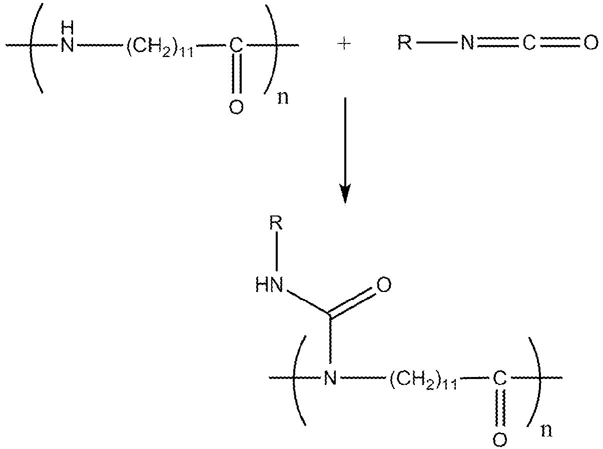

R-NH-CO correspondant à un reste du composé fonctionnel R-N=C=O lié, de manière covalente, au polyamide via l'atome d'azote et n correspondant au nombre de répétition du motif répétitif pris entre parenthèses.

Plus spécifiquement, le composé fonctionnel peut être un composé comprenant un groupe isocyanate et au moins un groupe polymérisable du type hétérocyclique, tel qu'un groupe thiophène.

Plus spécifiquement, le composé fonctionnel peut être un composé comprenant un groupe isocyanate et un groupe (3,4-éthylènedioxy)thiophène, ce dernier étant un groupe polymérisable *via* la fonction thiophène.

En particulier, le composé peut répondre à la formule suivante : 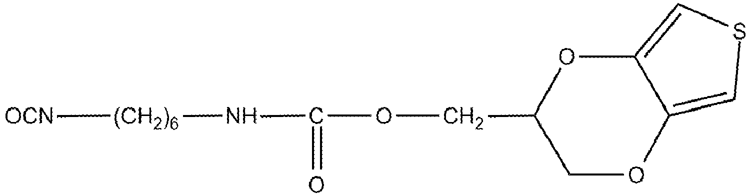 ce composé pouvant être préparé préalablement par une réaction d'addition nucléophile de l'hydroxyméthyl(3,4-éthylènedioxy)thiophène avec de l'hexaméthylènediisocyante, cette réaction d'addition nucléophile pouvant être illustrée par le schéma réactionnel suivant :

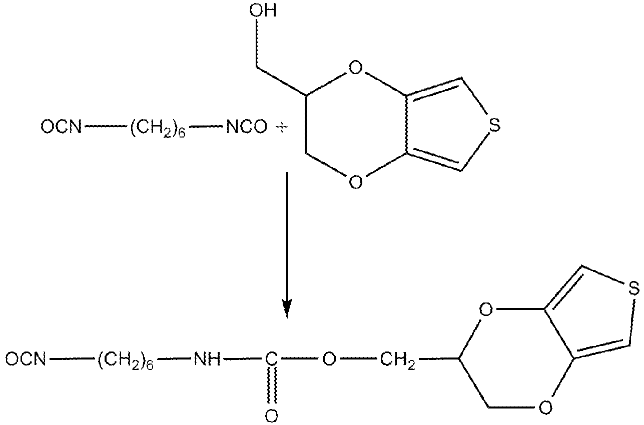

Cette réaction d'addition nucléophile peut être mise en oeuvre dans un milieu ne comprenant pas de fluide(s) supercritique(s).

En outre, l'étape de réaction du procédé de l'invention peut être réalisée en présence d'au moins un cosolvant, qui peut permettre d'améliorer la solubilité du composé fonctionnel et/ou d'améliorer la plasticité de la pièce polymérique et faciliter ainsi l'accession du composé fonctionnel au coeur de la pièce polymérique.

En outre, l'étape de réaction peut être réalisée en présence d'au moins un catalyseur.

Plus spécifiquement, l'étape de réaction peut comporter les opérations suivantes :
- une opération de placement, dans un réacteur, de la pièce polymérique, du composé fonctionnel, éventuellement d'au moins un cosolvant et éventuellement d'au moins un catalyseur;
- une opération d'introduction de CO₂ dans le réacteur;
- une opération de mise sous pression et chauffage du réacteur à une température supérieure à la température critique du CO₂ et à une pression supérieure à la pression critique du CO₂, cette température et cette pression étant maintenues jusqu'à achèvement de la réaction.

En variante, l'opération de mise sous pression et chauffage du réacteur peut être séquencée de la manière suivante :
- une opération de mise sous pression et chauffage du réacteur à une température supérieure à la température critique du CO₂ et à une pression supérieure à la pression critique du CO₂, la température et la pression étant choisies pour engendrer une imprégnation sans réaction de la pièce polymérique avec le composé fonctionnel suivie d'une éventuelle précipitation du composé fonctionnel ;
- une opération d'augmentation de la pression et de la température, la température et la pression étant fixées de sorte à permettre la réaction covalente du composé fonctionnel avec la pièce, cette température et cette pression étant maintenues jusqu'à achèvement de ladite réaction,
cette séquence d'opérations pouvant être répétée une ou plusieurs fois.

L'opération de placement peut être effectuée, avantageusement, de sorte à ce qu'il n'y ait pas de contact direct entre la pièce polymérique et le composé fonctionnel, l'éventuel catalyseur et l'éventuel cosolvant.

A l'issue de l'étape de réaction, les pièces polymériques sont ainsi modifiées chimiquement et sont liées de manière covalente à (ou greffées, de manière covalente, par) des restes du composé fonctionnel (c'est-à-dire ce qu'il subsiste du composé fonctionnel après réaction covalente des groupes isocyanates avec les groupes réactifs du polymère, étant entendu que ces restes comprennent, encore, au moins un groupe polymérisable du type hétérocyclique).

Après l'étape de réaction, les conditions supercritiques sont classiquement supprimées, par exemple, par dépressurisation du réacteur, dans lequel la réaction a eu lieu.

La pièce polymérique ainsi modifiée peut être ensuite soumise à un séchage, par exemple, sous vide.

En deuxième lieu, le procédé de l'invention comprend, à partir des groupes polymérisables du type hétérocyclique des restes du composé fonctionnel, une étape de polymérisation d'un deuxième composé comprenant au moins un groupe polymérisable du type hétérocyclique en présence d'un complexe métallique, la polymérisation se propageant ainsi à partir des restes du composé fonctionnel, via les groupes polymérisables du type hétérocyclique de ceux-ci. A l'issue de cette étape, il subsiste ainsi une pièce polymérique liée à des greffons consistant en des chaînes polymériques issues de la polymérisation du deuxième composé, la liaison entre la pièce polymérique et les greffons se faisant via les restes du composé fonctionnel qui forment des groupes espaceurs organiques entre la pièce polymérique et les greffons, ces restes étant liés, d'une part, de manière covalente, à la pièce polymérique et, d'autre part, de manière covalente, aux greffons susmentionnés. Dans ce cas, les restes sont ce qu'il subsiste du composé fonctionnel après qu'il ait réagi, d'une part, *via* son ou ses groupes isocyanates avec les groupes amines et/ou les groupes hydroxyles du ou des polymères de la pièce polymérique et, d'autre part, via son ou ses groupes polymérisables du type hétérocyclique avec le deuxième composé.

Cette étape de réaction par polymérisation est réalisée en présence d'au moins un fluide supercritique, avantageusement identique à celui utilisée lors de l'étape de réaction avec le composé fonctionnel, tel que du CO₂ supercritique.

Le deuxième composé comprend au moins un groupe polymérisable du type hétérocyclique, tel qu'un groupe thiophène, lequel ou lesquels peuvent être identiques ou différents du ou des groupes polymérisables du composé fonctionnel.

En particulier, le deuxième composé peut être un composé (3,4-éthylènedioxy) thiophène (désigné également sous l'abréviation EDOT).

Quant au complexe métallique, il peut être un complexe de fer (III), tel que du p-toluènesulfonate de fer (III) ou du trifluorométhanesulfonate de fer (III), ce complexe métallique contribuant à initier la polymérisation redox et à doper également le polymère résultant pour activer les propriétés antistatiques de celui-ci.

L'étape de polymérisation peut être une réaction redox de polymérisation, cette réaction étant induite par le complexe métallique.

Plus spécifiquement, l'étape de réaction par polymérisation peut comporter les opérations suivantes :
- une opération de placement, dans un réacteur, de la pièce polymérique ayant réagi avec le composé fonctionnel et du deuxième composé polymérisable ;
- une opération d'introduction de CO₂ liquide dans le réacteur;
- une opération de mise sous pression et chauffage du réacteur à une température supérieure à la température critique du CO₂ et à une pression supérieure à la pression critique du CO₂, pour engendrer une imprégnation sans réaction de la pièce polymérique avec le ou les deuxièmes composés suivie d'une éventuelle précipitation du ou des deuxièmes composés ;
- une opération d'introduction dans le réacteur du complexe métallique, la température et la pression étant maintenues à des valeurs supercritiques.

L'opération de placement peut être effectuée, avantageusement, de sorte à ce qu'il n'y ait pas de contact direct entre la pièce polymérique et le ou les composés, l'éventuel catalyseur, l'éventuel cosolvant et le ou les éventuels autres ingrédients.

A l'issue de l'étape de réaction par polymérisation, le procédé comprend, avantageusement, une étape d'arrêt des conditions supercritiques et éventuellement une étape de séchage de la pièce polymérique modifiée.

Le procédé de l'invention peut être mis en oeuvre dans un dispositif, par exemple, du type autoclave, comprenant une enceinte destinée à réceptionner la pièce polymérique, les réactifs, le fluide supercritique, l'éventuel cosolvant et l'éventuel catalyseur, des moyens de régulation de la pression de ladite enceinte pour la mise sous vide de celle-ci (par exemple, *via* une pompe à vide communiquant avec l'enceinte) et des moyens de chauffage.

D'autres avantages et caractéristiques de l'invention apparaîtront dans la description détaillée non limitative ci-dessous.

### EXPOSÉ DÉTAILLÉ DE MODES DE RÉALISATION PRÉFÉRÉS

### EXEMPLE 1

Cet exemple illustre la mise en oeuvre d'un mode spécifique du procédé de modification chimique de l'invention consistant en une modification chimique d'une pièce en polyamide-12, de sorte à améliorer sa conductivité électrique.

Pour ce faire, le choix du polymère conducteur PEDOT (ou Poly(3,4-éthylènedioxythiophène)) a été fait. Cependant, le PEDOT est insoluble dans le CO₂ supercritique et ne permet qu'une mise en oeuvre par polymérisation directe sur le substrat par une réaction redox du monomère (EDOT) avec un complexe de fer. Comme l'EDOT (et PEDOT) ne peuvent pas être directement liés/greffés à la matrice de PA-12, un greffage spécifique a donc été envisagé.

Aussi, trois phases, qui seront développées plus loin de manière plus précise, ont été mises en oeuvre :
a) une phase de synthèse, en phase liquide, d'un composé intermédiaire (nommé ci-après composé intermédiaire isocyanate/EDOT) par réaction de l'hexaméthyldiisocyanate avec un composé EDOT-OH, cette étape pouvant être illustrée par le schéma réactionnel suivant : 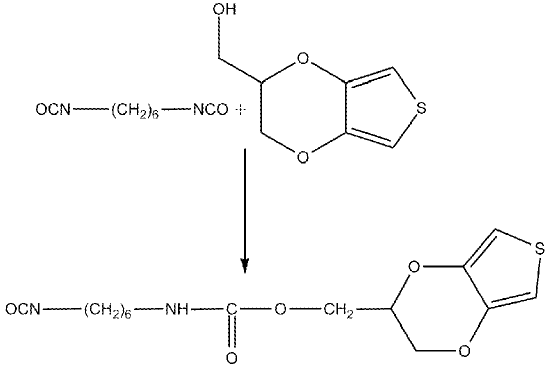
b) une phase de greffage, sous CO₂ supercritique, du composé intermédiaire avec du polyamide-12, cette étape pouvant être illustrée par le schéma réactionnel suivant : 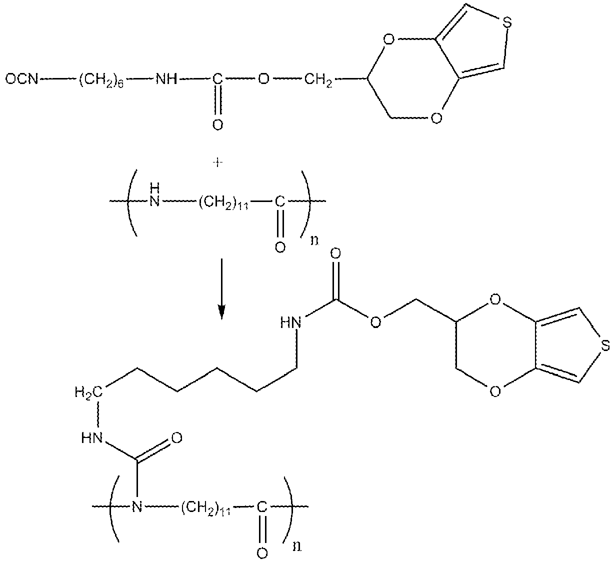 n correspondant au nombre de répétition du motif pris entre parenthèses ;
c) une phase de polymérisation, sous CO₂ supercritique, du monomère 3,4-éthylènedioxythiophène (EDOT) en PEDOT et de dopage avec un complexe à base de fer Fe (III) pour obtenir un polymère conducteur, cette étape pouvant être illustrée par le schéma réactionnel suivant : 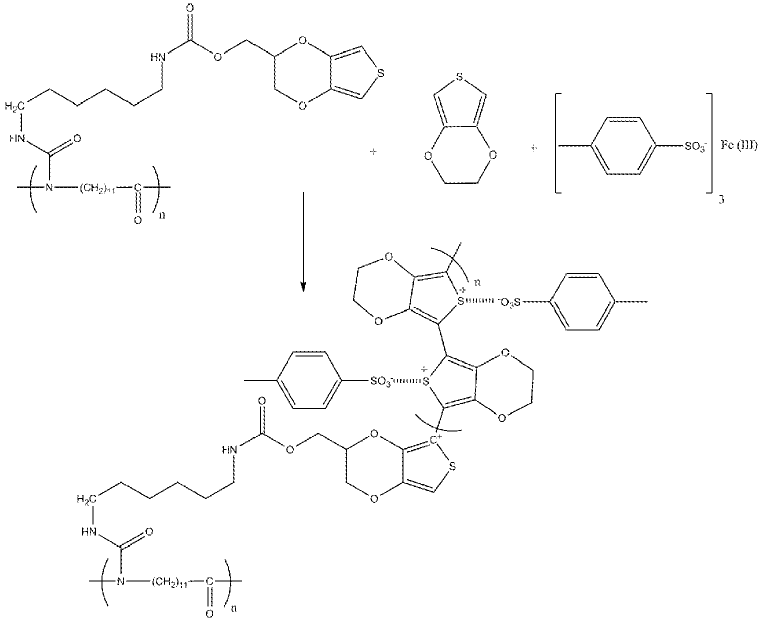
n correspondant au nombre de répétition des motifs pris entre parenthèses.

### 1°) Synthèse du composé intermédiaire isocyanate/EDOT

Le tableau ci-dessous illustre, dans l'ordre, les étapes permettant d'accéder à la synthèse du composé intermédiaire isocyanate/EDOT.

| | |
|---|---|
| Étape 1 | Introduction de 260 mg de 1,4-diazabicyclo[2.2.2]octane (DABCO) (2,32 mmol), comme catalyseur, dans un conteneur en verre |
| Étape 2 | Purge du conteneur avec de l'argon |
| Étape 3 | Ajout de 15 mL d'éther diéthylique |
| Étape 4 | Agitation du mélange sous bullage d'argon jusqu'à dissolution complète du DABCO |
| Étape 5 | Ajout de 500 mg d'EDOT-OH (2,90 mmol) préalablement dissous dans 4 mL d'éther diéthylique |
| Étape 6 | Ajout de 10 mL d'acétone anhydre |
| Étape 7 | Ajout de 487 mg d'hexaméthyldiisocyanate (2,90 mmol) |
| Étape 8 | Agitation du mélange sous bullage d'argon jusqu'à complète dissolution des réactifs |
| Étape 9 | Obtention du composé intermédiaire isocyanate/EDOT |

### 2°) Greffage du composé intermédiaire sur une pièce en polyamide-12 et polymérisation en PEDOT et dopage

La pièce initiale en polyamide-12 est un disque de 60 mm de diamètre, de 5 mm d'épaisseur et présentant une masse de 7,8 g et une résistivité de surface de 10¹¹ ohm/carré.

La pièce susmentionnée est soumise aux étapes successives suivantes :
- une étape d'imprégnation/greffage du composé intermédiaire (dite ci-dessous « Étape 1 ») ;
- une étape d'imprégnation avec le monomère EDOT (dite ci-dessous « Étape 2 ») ;
- une étape d'imprégnation avec le complexe de fer (III) permettant à la fois la polymérisation du monomère EDOT et le dopage du polymère ainsi formé pour le rendre conducteur (dite ci-dessous « Étape 3 »).

Ces trois étapes sont conduites sous CO₂ supercritique dans un réacteur de type « batch ». Plus spécifiquement, le réacteur est un réacteur en acier inoxydable du type « batch » de 600 mL muni d'un système de chauffage externe. Le CO₂ est introduit dans le réacteur avec une pompe à double piston dont les têtes sont refroidies à une température inférieure à 5 °C pour avoir du CO₂ en phase liquide à ce stade avant la mise en réaction. Il est muni, en son fond, d'un cristallisoir de contenance 60 mL destiné à accueillir les réactifs, l'éventuel catalyseur et l'éventuel cosolvant. La pièce en polyamide-12 est suspendue au-dessus du cristallisoir pour éviter tout contact avec celui-ci. Les expériences commencent à pression ambiante. Le réacteur est ensuite pressurisé jusqu'à une pression cible puis chauffée à la température souhaitée. La pièce est maintenue dans les conditions de traitement pendant une durée nécessaire jusqu'à achèvement de la réaction concernée. Le chauffage du réacteur est alors arrêté induisant une lente dépressurisation. La pression restante est évacuée avec les différentes vannes situées sur le couvercle du réacteur.

Plus spécifiquement, les conditions opératoires des étapes susmentionnées sont recensées dans le tableau ci-dessous.

| | |
|---|---|
| Étape 1 | Introduction du compose intermédiaire isocyanate/EDOT préalablement synthétisé et réaction sous CO₂ supercritique (300 bar, 100°C) pendant 4 heures |
| Étape 2 | Introduction de 2 g d'EDOT dans le réacteur sous CO₂ supercritique (300 bar, 100°C) pendant 4 heures |
| Étape 3 | Introduction de 2 g de p-toluènesulfonate de fer (III) dans le réacteur sous CO₂ supercritique (300 bar, 100°C) pendant 2 heures |

La pièce obtenue à l'issue de ces étapes présente une prise de masse de 2%, une bonne homogénéité de revêtement et une résistivité de surface de 10⁸ ohm/carré (soit une amélioration d'un facteur 1000).

## Revendications

1. Procédé de modification chimique d'une pièce polymérique en vue de lui conférer des propriétés antistatiques ou améliorer celles-ci, comprenant les étapes suivantes :
- une étape de réaction d'une pièce polymérique comprenant au moins un polymère comprenant, comme groupes réactifs, des groupes amines et/ou des groupes hydroxyles, avec un composé fonctionnel, dit également premier composé, comprenant au moins un groupe isocyanate et au moins un groupe polymérisable du type hétérocyclique, les groupes isocyanates réagissant, de manière covalente avec tout ou partie des groupes amines et/ou des groupes hydroxyles du ou des polymères, moyennant quoi il résulte une pièce polymérique liée, de manière covalente, à des restes du composé fonctionnel ;
- à partir des groupes polymérisables du type hétérocyclique des restes du composé fonctionnel, une étape de polymérisation d'un deuxième composé comprenant au moins un groupe polymérisable du type hétérocyclique en présence d'un complexe métallique,
ladite étape de réaction et ladite étape de polymérisation étant réalisées en présence d'au moins un fluide supercritique.

2. Procédé selon la revendication 1, dans lequel le fluide supercritique est du CO₂ supercritique.

3. Procédé selon la revendication 1 ou 2, dans lequel la pièce polymérique est une pièce comprenant un ou plusieurs polyamides.

4. Procédé selon l'une quelconque des revendications précédentes, dans lequel la pièce polymérique est une pièce en polyamide-12.

5. Procédé selon l'une quelconque des revendications précédentes, dans lequel la pièce polymérique est une pièce en polyamide-12, lequel présente une densité inférieure ou égale à 960 kg/m³, de préférence inférieure ou égale à 900 kg/m³.

6. Procédé selon l'une quelconque des revendications précédentes, dans lequel le composé fonctionnel est un composé non polymérique.

7. Procédé selon l'une quelconque des revendications précédentes, dans lequel le composé fonctionnel comprend, comme groupe polymérisable du type hétérocyclique, un groupe thiophène.

8. Procédé selon l'une quelconque des revendications précédentes, dans lequel le composé fonctionnel comprend un groupe isocyanate et un groupe (3,4-éthylènedioxy)thiophène.

9. Procédé selon l'une quelconque des revendications précédentes, dans lequel le composé fonctionnel répond à la formule suivante :

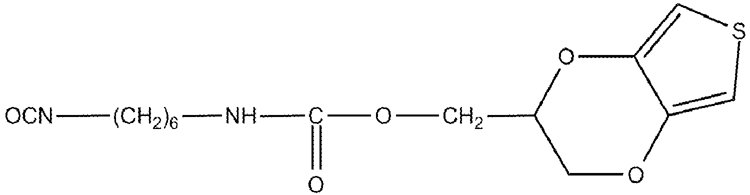

10. Procédé selon l'une quelconque des revendications précédentes, dans lequel l'étape de réaction comporte les opérations suivantes :
- une opération de placement, dans un réacteur, de la pièce polymérique, du composé fonctionnel, éventuellement d'au moins un cosolvant et éventuellement d'au moins un catalyseur;
- une opération d'introduction de CO₂ dans le réacteur;
- une opération de mise sous pression et chauffage du réacteur à une température supérieure à la température critique du CO₂ et à une pression supérieure à la pression critique du CO₂, cette température et cette pression étant maintenues jusqu'à achèvement de la réaction.

11. Procédé selon l'une quelconque des revendications précédentes, dans lequel l'étape de réaction par polymérisation est réalisée en présence d'au moins un fluide supercritique, identique à celui utilisé lors de l'étape de réaction avec le composé fonctionnel.

12. Procédé selon l'une quelconque des revendications précédentes, dans lequel le deuxième composé comprend, comme groupe(s) polymérisable(s) du type hétérocyclique, un groupe thiophène.

13. Procédé selon l'une quelconque des revendications précédentes, dans lequel le deuxième composé est un composé (3,4-éthylènedioxy) thiophène.

14. Procédé selon l'une quelconque des revendications précédentes, dans lequel le complexe métallique est un complexe de fer (III).

## Patentansprüche

1. Chemisches Modifizierungsverfahren für ein Polymerteil mit dem Ziel, ihm antistatische Eigenschaften zu verleihen oder diese Eigenschaften zu verbessern, umfassend die folgenden Schritte:
- einen Schritt einer Reaktion eines Polymerteils, das mindestens ein Polymer umfasst, das als reaktive Gruppen Amingruppen und/oder Hydroxylgruppen umfasst, mit einer funktionellen Verbindung, auch erste Verbindung genannt, die mindestens eine Isocyanatgruppe und mindestens eine polymerisierbare Gruppe vom Heterocyclustyp umfasst, wobei die Isocyanatgruppen auf kovalente Weise mit allen oder einem Teil der Amingruppen und/oder der Hydroxylgruppen des bzw. der Polymere reagieren, wodurch es zu einem Polymerteil führt, das auf kovalente Weise mit Resten der funktionellen Verbindung verbunden ist;
- ausgehend von polymerisierbaren Gruppen vom Heterocyclustyp von Resten der funktionellen Verbindung einen Schritt einer Polymerisation einer zweiten Verbindung, die mindestens eine polymerisierbare Gruppe vom Heterocyclustyp umfasst, in Gegenwart eines Metallkomplexes,
wobei der Schritt der Reaktion und der Schritt der Polymerisation in Gegenwart mindestens eines überkritischen Fluids durchgeführt werden.

2. Verfahren nach Anspruch 1, wobei das überkritische Fluid überkritisches CO₂ ist.

3. Verfahren nach Anspruch 1 oder 2, wobei das Polymerteil ein Teil ist, das ein oder mehrere Polyamide umfasst.

4. Verfahren nach einem der vorhergehenden Ansprüche, wobei das Polymerteil ein Teil aus Polyamid 12 ist.

5. Verfahren nach einem der vorhergehenden Ansprüche, wobei das Polymerteil ein Teil aus Polyamid 12 ist, das eine Dichte kleiner als oder gleich 960 kg/m³, vorzugsweise kleiner als oder gleich 900 kg/m³ aufweist.

6. Verfahren nach einem der vorhergehenden Ansprüche, wobei die funktionelle Verbindung eine nicht-polymere Verbindung ist.

7. Verfahren nach einem der vorhergehenden Ansprüche, wobei die funktionelle Verbindung als polymerisierbare Gruppe vom Heterocyclustyp eine Thiophengruppe umfasst.

8. Verfahren nach einem der vorhergehenden Ansprüche, wobei die funktionelle Verbindung eine Isocyanatgrupppe und eine (3,4-Ethylendioxy)thiophen-Gruppe umfasst.

9. Verfahren nach einem der vorhergehenden Ansprüche, wobei die funktionelle Verbindung der folgenden Formel entspricht:

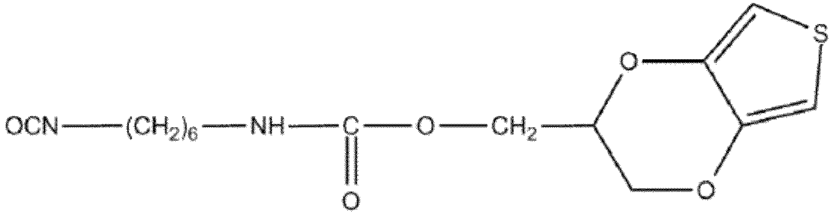

10. Verfahren nach einem der vorhergehenden Ansprüche, wobei der Schritt der Reaktion die folgenden Arbeitsschritte umfasst:
- einen Arbeitsschritt eines Platzierens des Polymerteils, der funktionellen Verbindung, gegebenenfalls mindestens eines Cosolvens und gegebenenfalls mindestens eines Katalysators, in einem Reaktor;
- einen Arbeitsschritt eines Einbringens von CO₂ in den Reaktor;
- einen Arbeitsschritt eines Unterdrucksetzens und eines Erhitzens des Reaktors auf eine Temperatur, die höher als die kritische Temperatur von CO₂ ist, und auf einen Druck, der höher als der kritische Druck von CO₂ ist, wobei diese Temperatur und dieser Druck bis zum Abschluss der Reaktion aufrechterhalten werden.

11. Verfahren nach einem der vorhergehenden Ansprüche, wobei der Schritt der Reaktion mittels Polymerisation in Gegenwart mindestens eines überkritischen Fluids durchgeführt wird, das mit dem identisch ist, das während des Schritts der Reaktion mit der funktionellen Verbindung verwendet wird.

12. Verfahren nach einem der vorhergehenden Ansprüche, wobei die zweite Verbindung als eine oder mehrere polymerisierbare Gruppen vom Heterocyclustyp eine Thiophengruppe umfasst.

13. Verfahren nach einem der vorhergehenden Ansprüche, wobei die zweite Verbindung eine (3,4-Ethylendioxy)thiophen-Verbindung ist.

14. Verfahren nach einem der vorhergehenden Ansprüche, wobei der Metallkomplex ein Eisen(III)-Komplex ist.

## Claims

1. A process for chemically modifying a polymeric part in order to impart antistatic properties thereto or to improve these properties, comprising the following steps:
- a step of reacting a polymeric part comprising at least one polymer comprising, as reactive groups, amine groups and/or hydroxyl groups, with a functional compound, also called first compound, comprising at least one isocyanate group and at least one heterocyclic type polymerisable group, the isocyanate groups covalently reacting with all or part of the amine groups and/or hydroxyl groups of the polymer(s), whereby this results in a polymeric part which is covalently bonded to residues of the functional compound;
- from the heterocyclic type polymerisable groups of the residues of the functional compound, a step of polymerising a second compound comprising at least one heterocyclic type polymerisable group in the presence of a metal complex,
said reaction step and said polymerisation step being carried out in the presence of at least one supercritical fluid.

2. The process of claim 1, wherein the supercritical fluid is supercritical CO₂.

3. The process of claim 1 or 2, wherein the polymeric part is a part comprising one or more polyamides.

4. The process according to any of the preceding claims, wherein the polymeric part is a polyamide-12 part.

5. The process according to any of the preceding claims, wherein the polymeric part is a polyamide-12 part, which has a density less than or equal to 960 kg/m³, preferably less than or equal to 900 kg/m³.

6. The process according to any of the preceding claims, wherein the functional compound is a non-polymeric compound.

7. The process according to any of the preceding claims, wherein the functional compound comprises, as a heterocyclic type polymerisable group, a thiophene group.

8. The process according to any of the preceding claims, wherein the functional compound comprises an isocyanate group and a (3,4-ethylenedioxy)thiophene group.

9. The process according to any of the preceding claims, wherein the functional compound has the following formula:

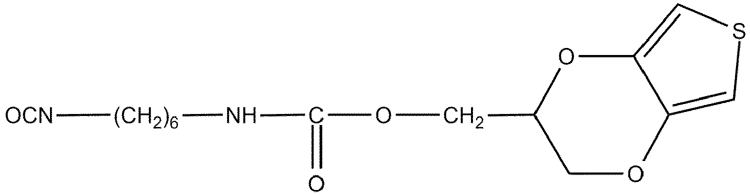

10. The process according to any of the preceding claims, wherein the reaction step comprises the following operations:
- an operation of placing, into a reactor, the polymeric part, the functional compound, optionally at least one cosolvent and optionally at least one catalyst;
- an operation of introducing CO₂ into the reactor;
- an operation of pressurising and heating the reactor to a temperature higher than the critical temperature of the CO₂ and to a pressure higher than the critical pressure of the CO₂, this temperature and this pressure being maintained until the reaction is complete.

11. The process according to any of the preceding claims, wherein the polymerisation reaction step is carried out in the presence of at least one supercritical fluid, identical to that used in the reaction step with the functional compound.

12. The process according to any of the preceding claims, wherein the second compound comprises, as heterocyclic type polymerisation group(s), a thiophene group.

13. The process according to any of the preceding claims, wherein the second compound is a (3,4-ethylenedioxy) thiophene compound.

14. The process according to any of the preceding claims, wherein the metal complex is an iron (III) complex.
